# EUROPEAN PATENT APPLICATION

(11) **EP 4 633 089 A1**
(43) Date of publication of application: **15.10.2025**
(21) Application number: 25169387.5
(22) Date of filing: 09.04.2025
(51) Int. Cl.: H04L 9/40, H04W 12/06

(54) **INFORMATION PROCESSING APPARATUS, COMMUNICATION METHOD, AND STORAGE MEDIUM**

(30) Priority: 12.04.2024 JP 2024064831
(71) Applicant: TOYOTA JIDOSHA KABUSHIKI KAISHA, Toyota-shi, Aichi-ken, 471-8571 (JP)
(72) Inventor: TAKEOKA, Koji, Toyota-shi, 471-8571 (JP)
(74) Representative: D Young & Co LLP

(57) **Abstract**

An information processing apparatus (10) comprises a storage configured to store first authentication data for receiving authentication from a first communication system (2); a communication interface (105) capable of accessing a predetermined cellular network, the communication interface being for connecting to a communication apparatus (11) holding second authentication data; and a controller (101) configured to access the first communication system (2) via the communication apparatus (11) and the cellular network in a case where the communication apparatus (11) connects to the cellular network by using the second authentication data, and to receive authentication from the first communication system (2) by using the first authentication data.

## Description

### CROSS REFERENCE TO THE RELATED APPLICATION

This application claims the benefit of Japanese Patent Application No. 2024-064831, filed on April 12, 2024, which is hereby incorporated by reference herein in its entirety.

### BACKGROUND

### Technical Field

The present disclosure relates to a communication technology.

### Description of the Related Art

Vehicles that perform communication by using a cellular network are becoming widely used.

In this regard, for example, Japanese Patent Laid-Open No. 2023-124635 discloses an invention related to a vehicle on which a data communication module is mounted.

### SUMMARY

An object of the present disclosure is to improve availability of communication.

The present disclosure in its one aspect provides an information processing apparatus comprising: a storage configured to store first authentication data for receiving authentication from a first communication system; a communication interface capable of accessing a predetermined cellular network, the communication interface being for connecting to a communication apparatus holding second authentication data; and a controller configured to access the first communication system via the communication apparatus and the cellular network in a case where the communication apparatus connects to the cellular network by using the second authentication data, and to receive authentication from the first communication system by using the first authentication data.

The present disclosure in its another aspect provides a communication method performed by an information processing apparatus including a communication interface that is capable of accessing a predetermined cellular network and that is for connecting to a communication apparatus holding second authentication data, the method comprising: acquiring, from a storage, first authentication data for receiving authentication from a first communication system; accessing the first communication system via the communication apparatus and the cellular network in a case where the communication apparatus connects to the cellular network by using the second authentication data; and receiving authentication from the first communication system by using the first authentication data.

The present disclosure in its another aspect provides an information processing apparatus comprising: a storage configured to store SIM profile information for receiving authentication from a first communication system that authenticates a user terminal by using the SIM profile information; a communication interface for connecting to a communication apparatus that is capable of accessing a first network; and a controller configured to access the first communication system via the communication apparatus and the first network in a case where the communication apparatus connects to the first network, and to receive authentication from the first communication system by using the SIM profile information.

Furthermore, as another mode, a program for causing a computer to perform the method described above, or a non-transitory computer-readable storage medium storing the program can be cited.

According to the present disclosure, availability of communication can be improved.

### BRIEF DESCRIPTION OF THE DRAWINGS

Fig. 1 is a schematic diagram of a vehicle communication network according to a first embodiment;
Fig. 2 is a diagram illustrating the configuration of the network illustrated in Fig. 1 in greater detail;
Fig. 3 is a hardware configuration diagram of an onboard apparatus 10;
Fig. 4 is a hardware configuration diagram of a communication apparatus 11;
Fig. 5 is a hardware configuration diagram of an authentication apparatus 20;
Fig. 6 is a software configuration diagram of the onboard apparatus 10;
Fig. 7 is a software configuration diagram of the communication apparatus 11;
Fig. 8 is a software configuration diagram of the authentication apparatus 20;
Fig. 9 is a flowchart of a process of connecting the onboard apparatus 10 to a communication system 2;
Fig. 10 is a flowchart of an authentication process that is performed by the authentication apparatus 20;
Fig. 11 is a schematic diagram of a vehicle communication network according to a modification of the first embodiment; and
Fig. 12 is a schematic diagram of a vehicle communication network according to a second embodiment.

### DESCRIPTION OF THE EMBODIMENTS

These days, connectivity of cars is progressing, and a communication apparatus is mounted on an increasing number of vehicles. For example, when an onboard communication apparatus performs communication with a server apparatus (such as an application server) via a cellular network, various services can be provided to a person on board the vehicle.

A general onboard communication apparatus includes a built-in communication module according to a specific communication standard, and it is not easy to change the communication standard.

However, a car is usually used over a long period of time such as 10 years or more, and thus, a communication standard assumed at the time of manufacture of a vehicle may become impossible to use due to generational change in communication standard, for example. To cope with such a situation, the built-in communication module has to be replaced, thus requiring a large cost.

A communication system according to the present disclosure solves such a problem.

An information processing apparatus according to a first aspect of the present disclosure includes a storage configured to store first authentication data for receiving authentication from a first communication system; a communication interface capable of accessing a predetermined cellular network, the communication interface being for connecting to a communication apparatus holding second authentication data; and a controller configured to access the first communication system via the communication apparatus and the cellular network in a case where the communication apparatus connects to the cellular network by using the second authentication data, and to receive authentication from the first communication system by using the first authentication data.

The information processing apparatus according to the present disclosure is typically a computer that is mounted on a mobile body such as a car. The information processing apparatus is capable of being connected to the communication apparatus.

The communication apparatus is an apparatus that is used to access a cellular network, and is an external communication module that is used by being inserted in a USB interface of a personal computer, for example.

Connection may be performed via a wired interface or a wireless interface. For example, the communication apparatus connects to the cellular network by using a SIM profile (second authentication data) stored in a SIM card.

The information processing apparatus receives authentication from the first communication system by using the first authentication data after connecting to the first communication system via the above-described communication apparatus.

The first authentication data is typically data comparable to the second authentication data, used to receive authentication from a predetermined communication system. For example, the first authentication data may be SIM profile information.

As described above, the information processing apparatus according to the present disclosure is characteristic in that the information processing apparatus accesses the first communication system via an externally-connected communication apparatus instead of a built-in communication module, and that the subject apparatus stores data (such as a SIM profile) for receiving authentication from the first communication system. The information processing apparatus does not necessarily have to include a module (a cellular module) for cellular communication.

According to such a configuration, even when there is a generational change of cellular network and a communication service that was previously used is ended, for example, a user of the apparatus can maintain access to the first communication system simply by replacing the communication apparatus. Furthermore, authentication from the first communication system can keep being received using same authentication data before and after the replacement. That is, even if a state of communication infrastructure changes during a period of provision of a service, the service can be continuously provided while minimizing the effect of the change.

Additionally, the storage does not necessarily have to be a built-in storage device. For example, the storage may be a built-in storage that stores a SIM profile and the like as data, or may be a medium, such as a SIM card, that can be inserted from outside the apparatus.

Additionally, the first communication system may be a system that authenticates a user terminal by using SIM profile information held by an eUICC. For example, the first communication system may be a system that authenticates a user terminal by using an authentication function of a cellular network, such as a Home Subscriber Server (HSS) or an Authentication Server Function (AUSF). In this case, the first authentication data is the SIM profile information.

Furthermore, the first communication system may be a communication system that is connected to the cellular network via an untrusted network.

For example, the first communication system and the cellular network may be connected to each other via an untrusted network such as the Internet. Also in this case, the first communication system can check validity of user equipment by using the first authentication data.

In the following, specific embodiments of the present disclosure will be described with reference to the drawings. A hardware configuration, a module configuration, a functional configuration, and the like described in each embodiment do not limit the technical scope of the disclosure thereto unless stated otherwise.

### (First Embodiment)

### [Outline of Network]

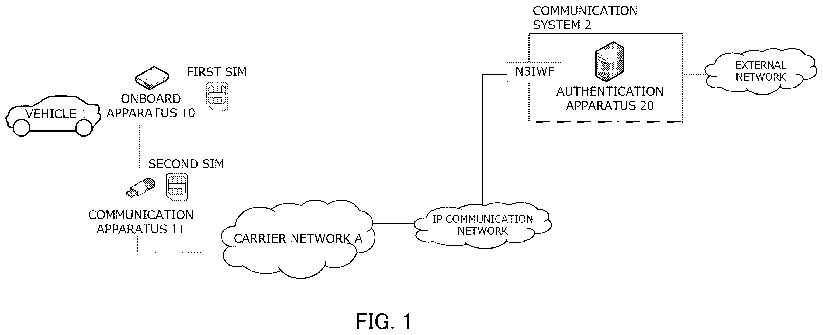

An outline of a vehicle communication network according to a first embodiment will be given with reference to Fig. 1. The vehicle communication network according to the present embodiment includes an onboard apparatus 10 mounted on a vehicle 1, a communication apparatus 11 that is capable of being connected to the onboard apparatus 10, and a communication system 2. Furthermore, the onboard apparatus 10 and the communication system 2 are connected via a carrier network. The communication system 2 is a network that includes a plurality of communication apparatuses including an authentication apparatus 20. Additionally, a plurality of vehicles 1 may be included in the vehicle communication network.

The vehicle 1 is a connected vehicle including a function of communicating with the communication system 2 to provide a predetermined service. The vehicle 1 is capable of providing various services by performing communication with a server apparatus connected to the communication system 2. The various services include a navigation service, a remote control (such as remote air conditioning) service, an in-vehicle Wi-Fi service, and an emergency call service, for example. Such services may be provided by the onboard apparatus 10, or by another onboard computer.

The onboard apparatus 10 is an apparatus that relays communication between a component in the vehicle 1 and the communication system 2. The onboard apparatus 10 does not include a communication module for performing wireless communication, and establishes a communication path to the communication system 2 by using the communication apparatus 11 connected to the subject apparatus.

As illustrated in Fig. 1, the onboard apparatus 10 allows connection of the communication apparatus 11. For example, the onboard apparatus 10 allows connection of the communication apparatus 11 by an interface such as a USB, and is capable of transmitting/receiving data via the communication apparatus 11. In other words, the onboard apparatus 10 allows tethering by the communication apparatus 11. The communication apparatus 11 is an apparatus that can be connected to any cellular network.

The communication apparatus 11 includes a second SIM, and is capable of connecting to a carrier network A by using profile information that is stored in the second SIM. For example, a user of the vehicle 1 signs a contract with an operator that provides a communication service by the carrier network A, and receives issuance of the second SIM from the operator.

The carrier network A includes a base station of a cellular network, a control device that manages user equipment (hereinafter "UE"), and the like. In the present embodiment, the carrier network A is connected to an IP communication network (such as the Internet).

Whereas the carrier network A is a communication system that is operated by a mobile network operator, the communication system 2 can be a communication system that is operated by a manufacturer of the vehicle 1, for example. By interconnecting the two, a unique service can be provided to the vehicle 1 by the communication system 2, for example.

The carrier network A is a network independent of the communication system 2, and thus cannot be connected to the communication system 2 as it is. Accordingly, in the present embodiment, a gateway (non-3GPP Interworking Function, hereinafter "N3IWF") for accommodating an access from an IP communication network is provided in the communication system 2. The N3IWF is a gateway for accommodating an untrusted non-3GPP wireless access. The communication system 2 can thereby receive an access via an IP communication network (via the carrier network A). Additionally, the IP communication network is typically, but not limited to, the Internet.

In the present embodiment, the onboard apparatus 10 connected to the carrier network A establishes an IPsec tunnel with the N3IWF of the communication system 2, and can thus connect to the communication system 2 via the carrier network A and the IP communication network ahead thereof. Accordingly, the onboard apparatus 10 connected to the carrier network A is enabled to communicate with the communication system 2 via a path through the IP communication network (such as the Internet).

In the present embodiment, the carrier network A only provides a communication line, and the communication system 2 performs authentication of the onboard apparatus 10 and provision of services to the onboard apparatus 10. The communication system 2 is similar to a core network of the carrier network A in terms of configuration, but is different from a core network that is provided by a mobile network operator to which a frequency is assigned and that provides a service through a line of own company in that a function of connecting to user equipment through a radio access network (RAN), a function of managing movement of user equipment and hand-over, and the like are not included.

The communication system 2 includes a function of authenticating user equipment (the onboard apparatus 10) connected to the system by the authentication apparatus 20.

Accordingly, the onboard apparatus 10 includes a first SIM storing profile information for receiving authentication from the communication system 2. The first SIM is a SIM that is issued by an operator (such as a vehicle manufacturer) that operates the communication system 2. The first SIM may be a physical SIM card, or may be an eSIM.

The onboard apparatus 10 connects to the communication system 2 via the carrier network A, and receives authentication from the communication system 2 by using the profile information stored in the first SIM. In the present embodiment, the authentication apparatus 20 in the communication system 2 performs authentication of the onboard apparatus 10 based on the profile information in the first SIM.

If the onboard apparatus 10 includes a communication module and the communication system 2 includes a radio access network, the communication system 2 may receive connection of the onboard apparatus 10 and perform authentication by the first SIM that is issued by the operator (such as the vehicle manufacturer) operating the system.

However, in the present embodiment, the onboard apparatus 10 does not include a communication module, and connects to the communication system 2 via a path through the carrier network A by using the communication apparatus 11. In this case, only authentication by the carrier network A (authentication using the second SIM) is performed, and also, there is an untrusted network on the path, and thus, the communication system 2 cannot trust the onboard apparatus 10 as it is. Moreover, the communication system 2 and the carrier network A cannot share an authentication result for the onboard apparatus 10 due to operators being different.

Accordingly, in the present embodiment, the communication system 2 (the authentication apparatus 20) authenticates the onboard apparatus 10 connected via the N3IWF by using authentication information in the first SIM.

A SIM card normally includes two types of information, namely, information for connecting to a radio access network provided by a cellular network, and information for receiving authentication from the cellular network. By contrast, in the present embodiment, the communication system 2 not including a radio access network authenticates the onboard apparatus 10 using only the latter.

Accordingly, even when a communication line between the onboard apparatus 10 and the communication system 2 is changed, the communication system 2 can keep performing robust authentication in the same manner as in the case of cellular communication without changing an apparatus configuration.

Furthermore, even when a previously used service (such as a 5G service) of a cellular network is ended, a user of the onboard apparatus 10 can maintain a communication path to the communication system 2 by replacing the communication apparatus 11. Also in this case, only the cellular network that is used is changed, and a method used by the communication system 2 to authenticate the user equipment is not changed, and thus, the user can keep receiving a service without updating the onboard apparatus 10.

### [Details of Network Configuration]

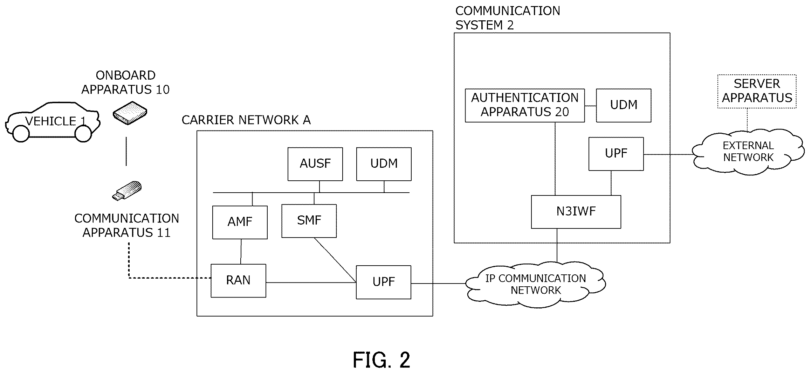

Fig. 2 is a diagram illustrating in detail structural elements of each network described with reference to Fig. 1. Additionally, in Fig. 2, structural elements related to the first embodiment, among structural elements of each system, are extracted and illustrated, and the structural elements of each system are not limited to those illustrated in Fig. 2.

In the present embodiment, the carrier network A is a communication system according to 5G standard. The carrier network A includes a radio access network (hereinafter "RAN"), a function of managing sessions of communication terminals including the onboard apparatus 10 (Session Management Function, hereinafter "SMF"), a function of managing movement of a communication terminal (Access and Mobility Management Function, hereinafter "AMF"), a function of performing relaying of data on a user plane (User Plane Function, hereinafter "UPF"), and the like. The carrier network A further includes a function of performing user authentication (Authentication Server Function, hereinafter "AUSF"), a function of performing acquisition of subscriber information (Unified Data Management, hereinafter "UDM"), and the like. Additionally, each function may be read as "device".

The communication system 2 is also a communication system according to 5G standard. The communication system 2 includes the gateway for accommodating an access from an IP communication network (N3IWF), the authentication apparatus 20, and an UPF as a gateway for connecting to an external network.

The authentication apparatus 20 performs a process of authenticating user terminals including the onboard apparatus 10. The authentication apparatus 20 is an apparatus corresponding to the AMF and AUSF in a 5G system. The authentication apparatus 20 is connected to the UDM, and performs authentication of user equipment based on information (subscriber information corresponding to the first SIM) stored in a database.

As described above, the carrier network A includes the function of authenticating user equipment (the communication apparatus 11) connected via a base station. Furthermore, the carrier network A includes the UPF connected to an IP communication network (such as the Internet). Accordingly, user equipment (the communication apparatus 11) connected to the carrier network A is able to perform communication with the IP communication network.

In the case of establishing a network connection via the communication apparatus 11, the onboard apparatus 10 transmits a connection request for the communication system 2 by using the N3IWF in the communication system 2 as a destination. As described above, the N3IWF is a gateway for accommodating an access from the IP communication network, and thus, the onboard apparatus 10 is able to communicate with the communication system 2 via the N3IWF.

As this time, the onboard apparatus 10 receives authentication from the authentication apparatus 20 by using authentication information included in the profile information stored in the first SIM.

The connection request is processed by the authentication apparatus 20 in the communication system 2, and authentication is performed between the onboard apparatus 10 and the authentication apparatus 20. The authentication apparatus 20 performs authentication of the onboard apparatus 10 based on the authentication information included in the first SIM. When authentication is complete, a communication path is established between the onboard apparatus 10 and the communication system 2, and services can be provided to the onboard apparatus 10 by the communication system 2.

Additionally, the server apparatus that provides a service to the onboard apparatus 10 may be present inside the communication system 2, or may be present outside the communication system 2, as illustrated in Fig. 2.

Additionally, in the description of the embodiment, a wide area network between the carrier network A and the communication system 2 is referred to as "IP communication network", and a wide area network connected to outside the communication system 2 is referred to as "external network", but the two may be a same network (such as the Internet).

### [Hardware Configuration]

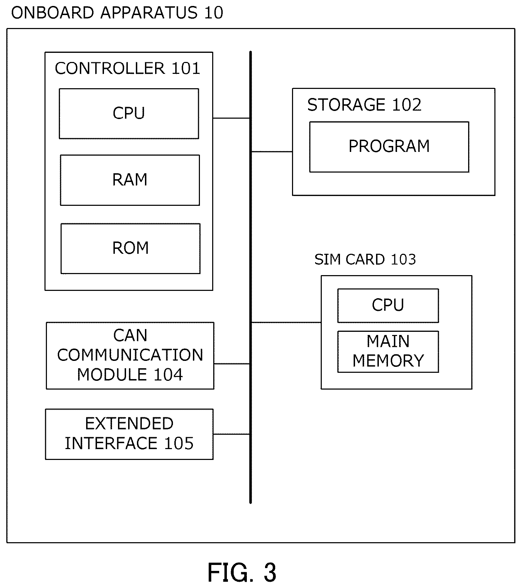

Next, a hardware configuration of each apparatus constituting the system will be described. Fig. 3 is a diagram schematically illustrating an example of a hardware configuration of the onboard apparatus 10 according to the present embodiment.

The onboard apparatus 10 can be configured as a computer including a processor (CPU, GPU, etc.), a main memory (RAM, ROM, etc.), and an auxiliary memory (EPROM, hard disk drive, removable medium, etc.). The auxiliary memory stores an operating system (OS), various programs, various tables and the like, and each function (software module) matching a predetermined object as described later can be implemented through execution of a program that is stored therein. However, one or some or all of functions may alternatively be implemented as a hardware module by a hardware circuit such as an ASIC or an FPGA, for example.

The onboard apparatus 10 includes a controller 101, a storage 102, a SIM card 103, a CAN communication module 104, and an extended interface 105.

The controller 101 is an arithmetic unit that implements various functions of the onboard apparatus 10 by executing a predetermined program. For example, the controller 101 can be implemented by a hardware processor such as a CPU. Moreover, the controller 101 may include a RAM, a ROM (Read Only Memory), a cache memory and the like.

The storage 102 is means for storing information, and is a storage medium such as a RAM, a magnetic disk, or a flash memory. Programs to be executed by the controller 101, data to be used by the programs, and the like are stored in the storage 102.

The SIM card 103 is an embedded universal integrated circuit card (eUICC) for receiving authentication from the communication system 2. The SIM card 103 is the first SIM in Fig. 1. The SIM card 103 is a microcomputer including a CPU and a main memory, and is connected to the onboard apparatus 10 via a SIM card slot. The SIM card 103 includes authentication information for receiving authentication from the communication system 2.

Additionally, in the present embodiment, the first SIM is a physical SIM card, but the first SIM may instead be an eSIM.

The CAN communication module 104 is a communication interface for connecting the onboard apparatus 10 to an in-vehicle network of the vehicle 1. For example, the CAN communication module 104 may include a network interface board that performs communication according to controller area network (CAN) protocol. The onboard apparatus 10 is capable of performing data communication with other structural elements of the vehicle 1 via the CAN communication module 104.

The extended interface 105 is an interface for connecting the onboard apparatus 10 and the communication apparatus 11 to each other. For example, the extended interface 105 is a USB interface. For example, the onboard apparatus 10 is capable of connecting to the communication apparatus 11 via the USB interface. Additionally, the extended interface may connect the onboard apparatus 10 and the communication apparatus 11 by a wireless communication interface.

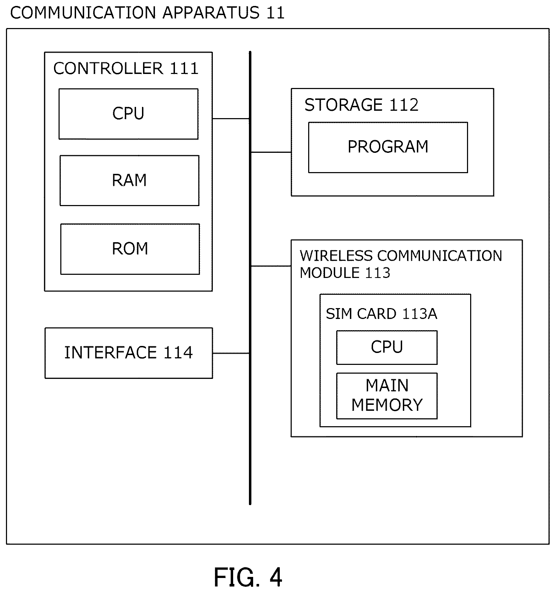

Next, a hardware configuration of the communication apparatus 11 will be described. Fig. 4 is a diagram schematically illustrating an example of a hardware configuration of the communication apparatus 11 according to the present embodiment.

The communication apparatus 11 includes a controller 111, a storage 112, a wireless communication module 113, and an interface 114.

Like the controller 101, the controller 111 is an arithmetic unit that implements various functions of the communication apparatus 11 by executing a predetermined program. For example, the controller 111 can be implemented by a hardware processor such as a CPU.

The storage 112 is means for storing information, and is a storage medium such as a RAM, a magnetic disk, or a flash memory. Programs to be executed by the controller 111, data to be used by the programs, and the like are stored in the storage 112.

The wireless communication module 113 is a communication device that performs wireless communication with a predetermined network. In the present embodiment, the wireless communication module 113 is capable of communicating with a predetermined cellular network (the carrier network A). The wireless communication module 113 may be an integrated circuit (cellular module) for performing cellular communication.

The wireless communication module 113 includes a SIM card 113A. The SIM card 113A is the second SIM in Fig. 1. The SIM card 113A is a microcomputer including a CPU and a main memory. The SIM card 113A includes information for connecting to the carrier network A (PLMN information), and the authentication information for receiving authentication from the network. The second SIM may be a physical SIM card, or may be an eSIM or the like.

The interface 114 is an interface corresponding to the extended interface 105, and is an interface for connecting the onboard apparatus 10 and the communication apparatus 11 to each other. For example, the communication apparatus 11 is capable of connecting to the onboard apparatus 10 via an interface such as a USB.

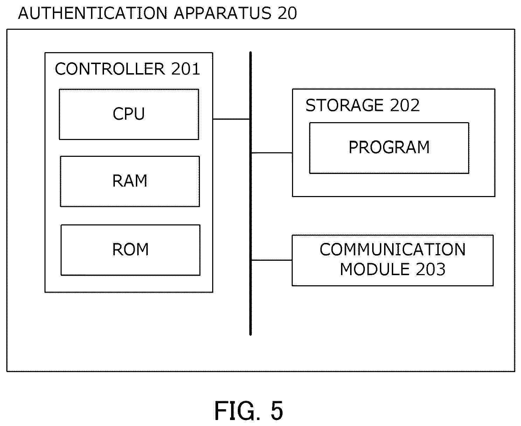

Next, a hardware configuration of the authentication apparatus 20 will be described. Fig. 5 is a diagram schematically illustrating an example of a hardware configuration of the authentication apparatus 20 according to the present embodiment.

The authentication apparatus 20 is configured as a computer including a controller 201, a storage 202, and a communication module 203.

The authentication apparatus 20 can be configured as a computer including a processor (CPU, GPU, etc.), a main memory (RAM, ROM, etc.), and an auxiliary memory (EPROM, hard disk drive, removable medium, etc.). However, one or some or all of functions (software modules) may alternatively be implemented as a hardware module by a hardware circuit such as an ASIC or an FPGA, for example.

The controller 201 is an arithmetic unit that implements various functions (software modules) of the authentication apparatus 20 by executing a predetermined program. For example, the controller 201 can be implemented by a hardware processor such as a CPU.

The storage 202 is means for storing information, and is a storage medium such as a RAM, a magnetic disk, or a flash memory. Programs to be executed by the controller 201, data to be used by the programs, and the like are stored in the storage 202.

The communication module 203 is a communication interface for connecting the authentication apparatus 20 to the communication system 2. The communication module 203 is capable of achieving data communication between the authentication apparatus 20 and another apparatus in the communication system 2.

### [Software Configuration]

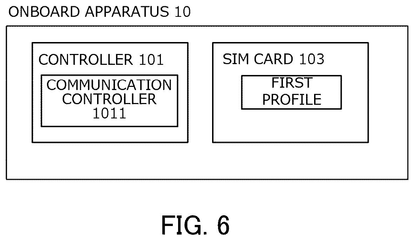

Next, a software configuration of each apparatus constituting the system will be described. Fig. 6 is a diagram schematically illustrating a software configuration of the onboard apparatus 10 according to the present embodiment.

In the present embodiment, the controller 101 of the onboard apparatus 10 includes a software module of a communication controller 1011. The software module may be implemented through execution of a program stored in the storage 102 by the controller 101 (CPU). Additionally, information processing that is performed by the software module is synonymous with information processing that is performed by the controller 101 (CPU).

Furthermore, the SIM card 103 (the first SIM) stores a first profile that is SIM profile information. The first profile is a profile that is issued by the operator managing the communication system 2. For example, the first profile includes identification information such as International Mobile Subscription Identity (IMSI) and Integrated Circuit Card ID (ICCID), and authentication information (key information) for receiving SIM authentication such as AKA authentication. Additionally, in the case where the first SIM is an eSIM, the first profile may be stored in the storage 102.

The communication controller 1011 establishes network connection in response to a request from a vehicle component included in the vehicle 1. In the case where the communication apparatus 11 including the second SIM is connected to the onboard apparatus 10, the onboard apparatus 10 instructs the communication apparatus 11 to perform network connection via the carrier network A. Additionally, in the case where a plurality of communication apparatuses 11 can be used, the communication controller 1011 may determine the communication apparatus to be used for connection based on selection by a user.

After the communication apparatus 11 establishes connection to the carrier network A, the communication controller 1011 interacts with the communication system 2 (the authentication apparatus 20) via the carrier network A, and receives authentication from the authentication apparatus 20 by using the profile information (the first profile) stored in the first SIM. Any procedure for authentication that is used by a 5F system may be used.

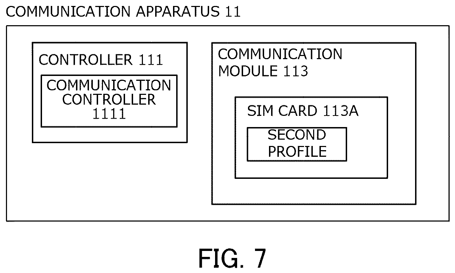

Next, a software configuration of the communication apparatus 11 will be described. Fig. 7 is a diagram schematically illustrating the software configuration of the communication apparatus 11 according to present embodiment.

In the present embodiment, the controller 111 of the communication apparatus 11 includes a software module of a communication controller 1111. The software module may be implemented through execution of a program stored in the storage 112 by the controller 111 (CPU). Additionally, information processing that is performed by the software module is synonymous with information processing that is performed by the controller 111 (CPU).

Furthermore, the SIM card 113A (the second SIM) embedded in the wireless communication module 113 stores a second profile that is SIM profile information. The second profile is a profile that is issued by a telecommunications operator managing the carrier network A. Like the first profile, the second profile includes identification information such as IMSI, ICCID and the like, and authentication information (key information) for receiving SIM authentication.

The communication controller 1111 establishes network connection in response to a request from the onboard apparatus 10. In the case where there is a connection request from the onboard apparatus 10, the communication controller 1111 performs network connection via the carrier network A. At this time, the communication controller 1111 receives authentication from the control device (AUSF) included in the carrier network A, by using the profile information (the second profile) stored in the second SIM.

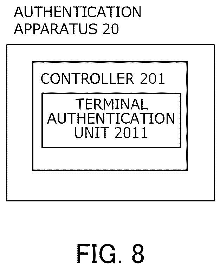

Next, a software configuration of the authentication apparatus 20 will be described. Fig. 8 is a diagram schematically illustrating the software configuration of the authentication apparatus 20 according to the present embodiment.

In the present embodiment, the controller 201 of the authentication apparatus 20 includes a software module of a terminal authentication unit 2011. The software module may be implemented through execution of a program stored in the storage 202 by the controller 201 (CPU). Additionally, information processing that is performed by the software module is synonymous with information processing that is performed by the controller 201 (CPU).

The terminal authentication unit 2011 performs a process of authenticating the onboard apparatus 10, in response to a request from the onboard apparatus 10. The authentication process can be performed by the following sequence specified by 3GPP (registered trademark), for example.
(1) Process of receiving a Registration Request from the onboard apparatus 10.
(2) Process of transmitting a request for obtaining authentication-related data to the UDM.
(3) Process of acquiring the authentication-related data (e.g., Authentication Vector) from the UDM.
(4) Process of transmitting a challenge (Authentication Request) to the onboard apparatus 10.
(5) Process of receiving a response (Authentication Response) from the onboard apparatus 10.
(6) Process of checking validity of the onboard apparatus 10 based on the response.

Furthermore, the terminal authentication unit 2011 may also perform a process necessary for registering the onboard apparatus 10 in the communication system 2.

Moreover, in the case where the authentication apparatus 20 also serves as the AMF in a 5G system, the authentication apparatus 20 may further include a software module for performing a predetermined process for managing the user equipment or communication, in addition to the authentication process described above.

### [Flowchart]

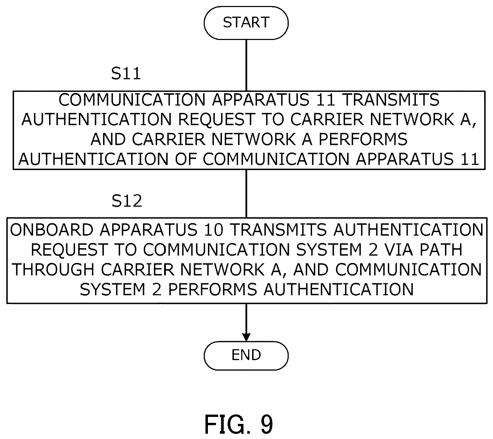

Next, details will be given of a process that is performed at a time of the onboard apparatus 10 connecting to the communication system 2. Fig. 9 is a flowchart of a process that is performed at a time of the onboard apparatus 10 connecting to the communication system 2.

First, in step S11, the onboard apparatus 10 instructs the communication apparatus 11 to perform network connection. In response, the communication apparatus 11 starts connection using the carrier network A. More specifically, the controller 111 of the communication apparatus 11 transmits an authentication request to the carrier network A via a base station of the carrier network A. The authentication request is received by the AMF of the carrier network A, and the AMF and the AUSF authenticate the communication apparatus 11 based on authentication-related data acquired from the UDM. The profile information stored in the second SIM is used in the authentication.

When authentication is complete, a communication path is established between the communication apparatus 11 and the carrier network A, and the communication apparatus 11 is thus enabled to communicate with the IP communication network via the UPF.

When the communication apparatus 11 is enabled to communicate with the IP communication network, authentication is started in step S12 between the onboard apparatus 10 and the communication system 2. In step S12, the onboard apparatus 10 establishes an IPsec tunnel to the N3IWF through a path through the carrier network that is a tethering destination (that is, the carrier network A), and then, transmits an authentication request to the communication system 2. The authentication request reaches the communication system 2 via the IP communication network and the N3IWF, and is received by the authentication apparatus 20.

Next, the authentication apparatus 20 starts authentication of the onboard apparatus 10 according to the received authentication request. In the present step, authentication of the onboard apparatus 10 is performed based on the profile information stored in the first SIM.

When the authentication apparatus 20 succeeds in authenticating the onboard apparatus 10, a communication path is established by the communication system 2. The onboard apparatus 10 connected to the communication system 2 via the N3IWF is thereby enabled to communicate with any server apparatus that is connected to the communication system 2. Establishment of a communication path and relaying of data using the communication path may be performed by the authentication apparatus 20, or may be performed by another apparatus included in the communication system 2.

Additionally, in a state where a communication path is not established, the communication system 2 does not relay communication. Accordingly, for example, communication from the onboard apparatus 10 that is not authenticated to a server apparatus is blocked by the communication system 2.

Next, a process that is performed by the authentication apparatus 20 and that is related to authentication will be described.

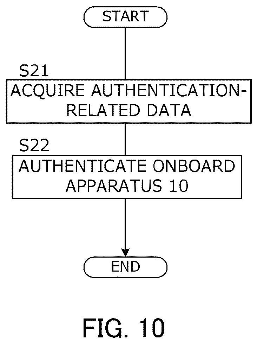

Fig. 10 is a flowchart of a process that is performed by the authentication apparatus 20 in step S12. The illustrated process is started at a timing when the authentication request transmitted by the onboard apparatus 10 is received by the authentication apparatus 20 (the terminal authentication unit 2011).

First, in step S21, the terminal authentication unit 2011 acquires authentication-related data. The authentication-related data is data used to authenticate the onboard apparatus 10.

For example, the authentication-related data may be a challenge that is transmitted to the user equipment (the onboard apparatus 10), an authentication token, an expected response value from the user equipment (the onboard apparatus 10), or the like. The authentication-related data may be generated by the terminal authentication unit 2011 based on information provided by the UDM (such as Authentication Vector). Furthermore, the terminal authentication unit 2011 may acquire the authentication-related data from the UDM.

Additionally, the authentication-related data cited in the present example is used to perform AKA authentication. AKA authentication is an authentication method based on a challenge response, performed to authenticate a terminal by using a SIM card.

In step S22, the terminal authentication unit 2011 authenticates the onboard apparatus 10 based on the authentication-related data. In the case of performing AKA authentication, the authentication apparatus 20 transmits a challenge to the onboard apparatus 10, and in response, the onboard apparatus 10 generates a response. The response is generated based on authentication information (private key) included in the profile information stored in the first SIM. In the case where the generated response matches what is calculated based on the authentication-related data, it can be assumed that the onboard apparatus 10 is successfully authenticated.

Additionally, in the present example, AKA authentication is cited as an example of the method of authenticating the onboard apparatus 10, but authentication may be performed by any other method as long as the method is for performing authentication based on information that is stored in a SIM card.

As described above, the onboard apparatus 10 according to the first embodiment is capable of connecting to the communication apparatus 11, and of performing communication with the communication system 2 via any cellular network via the communication apparatus 11. Accordingly, a communication path can be secured and communication can be performed even when a wireless communication module is not embedded in the onboard apparatus 10.

Furthermore, the onboard apparatus 10 according to the first embodiment receives authentication from the communication system 2 by using the profile information stored in the first SIM, regardless of the network that is passed through. That is, the first SIM included in the onboard apparatus 10 is not used for connecting to a cellular network, and is used just for authentication.

According to such a configuration, even in a case where there is a generational change of the cellular network, for example, a user of an apparatus can maintain access to the communication system 2 simply by replacing the communication apparatus. Furthermore, authentication from the communication system 2 can keep being received by using same authentication data before and after the replacement. That is, even if a state of communication infrastructure changes during a period of provision of a service, the service can be continuously provided while minimizing the effect of the change.

### (First Modification of First Embodiment)

In the first embodiment, a communication path to the communication system 2 is established by tethering, by connecting the communication apparatus 11 to the onboard apparatus 10.

However, a plurality of communication paths can be set by tethering.

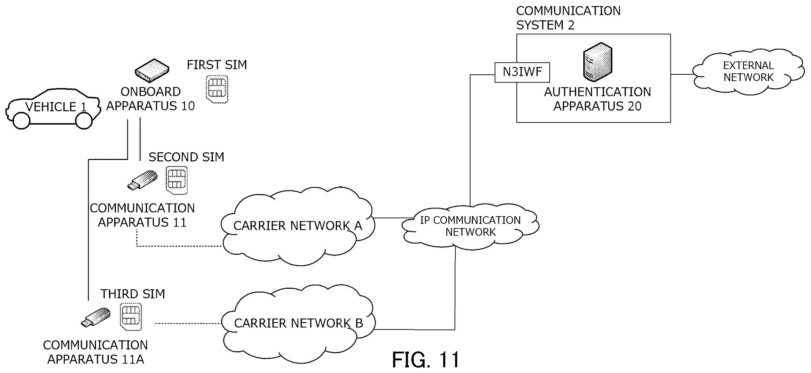

Fig. 11 is a diagram illustrating an outline of a vehicle communication network according to a present modification.

The onboard apparatus 10 may be connected to the communication apparatus 11 described in the first embodiment, and also to another communication apparatus 11A. The communication apparatus 11A includes a SIM card (third SIM) for connecting to a carrier network B. The communication apparatus 11 and the communication apparatus 11A can be connected at the same time.

In the present modification, the onboard apparatus 10 can select an apparatus to be used for communication from the communication apparatus 11 and the communication apparatus 11A. In the case where the communication apparatus 11 is selected as the apparatus to be used for communication, communication is performed via the carrier network A. In the case where the communication apparatus 11A is selected as the apparatus to be used for communication, communication is performed via the carrier network B.

In the case where there is a plurality of communication paths based on tethering, the communication path to be used may be determined by the communication controller 1011 before execution of step S11, for example.

Whichever communication path is used, the onboard apparatus 10 receives authentication from the authentication apparatus 20 by using the profile information stored in the first SIM. According to such a configuration, a communication path can be freely added without changing the configuration where authentication is performed using the first SIM.

### (Second Modification of First Embodiment)

In the first embodiment, a mode is described where the communication apparatus 11 connected to the carrier network A accesses the communication system 2 via an untrusted network (IP communication network). However, an untrusted network does not necessarily have to be present between the communication apparatus 11 and the communication system 2.

For example, a trusted closed network may be connected to the carrier network A, and the communication apparatus 11 may access the communication system 2 via such a network. Also in this case, as in the first embodiment, the onboard apparatus 10 can receive authentication from the communication system 2 by using the profile information stored in the first SIM.

### (Second Embodiment)

In the first embodiment, a mode where the communication apparatus 11 in which a wireless communication module for performing cellular communication is embedded accesses the communication system 2 via the carrier network A is described as an example. However, the communication apparatus 11 does not necessarily have to perform communication through a cellular network.

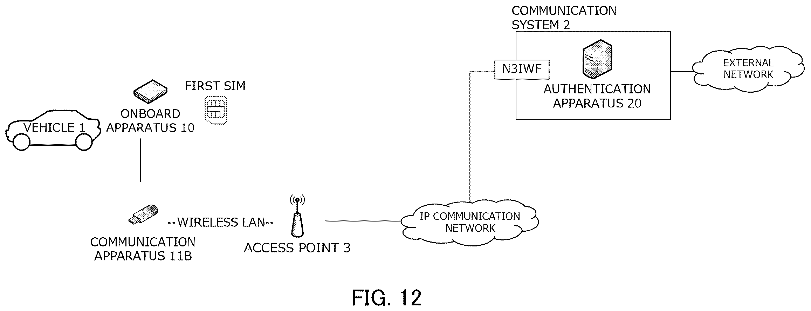

Fig. 12 is a diagram illustrating an outline of a vehicle communication network according to a second embodiment. A communication apparatus 11B according to the present embodiment is a client apparatus (wireless LAN adapter) for connecting to an access point of a wireless LAN. Unlike the first embodiment, the communication apparatus 11B does not include a SIM for a cellular network.

In the present embodiment, the communication apparatus 11B is capable of connecting to an access point 3 that provides an access to an IP communication network. The access point 3 is an apparatus that includes a function of receiving wireless connection from the client apparatus, and of providing an access to the IP communication network. The access point 3 may be an apparatus that serves both as a wireless router apparatus and an optical network unit (ONU).

In the present embodiment, a path from the communication apparatus 11B to the IP communication network is established when the communication apparatus 11B accesses the access point 3. The onboard apparatus 10 can thus access the IP communication network using the communication apparatus 11B as a gateway. Furthermore, as in the first embodiment, the onboard apparatus 10 can connect to the communication system 2 by establishing an IPsec tunnel to the N3IWF of the communication system 2.

As described above, the communication apparatus according to the present disclosure may access an IP communication network by using a communication medium other than a cellular network.

### (Modifications)

The embodiments described above are merely examples, and the present disclosure can be changed as appropriate within the scope of the disclosure.

For example, processes and means described in the present disclosure can be freely combined to the extent that no technical conflict exists.

Furthermore, in the description of the embodiments, 5G is cited as an example of the standard of the cellular network, but 4G (LTE-Advanced) or the like may also be adopted as the communication standard. In this case, the N3IWF can be replaced by an enhanced Packet Data Gateway (ePDG) or the like.

Moreover, in the description of the embodiments, the onboard apparatus 10 is cited as an example of the user equipment, but the user equipment may instead be an IoT terminal or the like.

Furthermore, in the description of the embodiments, an example is cited where authentication of the onboard apparatus 10 is performed using the profile information stored in the SIM, but the onboard apparatus 10 may also be authenticated by other methods. For example, the onboard apparatus 10 may hold, in the storage 102, a pair of key information and an electronic certificate (issued by a certificate authority, for example) for verifying authenticity of the key information. The authentication apparatus 20 can perform authentication of the onboard apparatus 10 by using such information. In any case, authentication is performed using same authentication information, regardless of the communication path.

Moreover, in each embodiment, an example is cited where the communication path is established by USB tethering, but the communication path may instead be based on Wi-Fi tethering. In this case, the onboard apparatus 10 may be capable of wirelessly connecting to a smartphone or the like carried by a user of the vehicle 1. In this case, the communication apparatus 11 (or the communication apparatus 11A) is replaced by the smartphone or the like.

Furthermore, the processes described as being performed by one device may be shared and executed by a plurality of devices. Alternatively, the processes described as being performed by different devices may be performed by a single device. In a computer system, the hardware configuration (server configuration) by which each function is realized can be flexibly changed.

The present disclosure can also be realized by supplying a computer program implementing the functions described in the above embodiments to a computer, and having one or more processors of the computer read and execute the program. Such a computer program may be provided to the computer by a non-transitory computer-readable storage medium connectable to the system bus of the computer, or may be provided to the computer via a network. Non-transitory computer-readable storage media include, for example, any type of disk, such as a magnetic disk (e.g., a floppy disk, a hard disk drive (HDD), etc.), an optical disk (e.g., a CD-ROM, a DVD disk, a Blu-ray disk, etc.), a read-only memory (ROM), a random-access memory (RAM), an EPROM, an EEPROM, a magnetic card, a flash memory, an optical card, or any type of medium suitable for storing electronic instructions.

## Claims

1. An information processing apparatus (10) comprising:
a storage configured to store first authentication data for receiving authentication from a first communication system (2);
a communication interface (105) capable of accessing a predetermined cellular network, the communication interface (105) being for connecting to a communication apparatus (11) holding second authentication data; and
a controller (101) configured to access the first communication system (2) via the communication apparatus (11) and the cellular network in a case where the communication apparatus (11) connects to the cellular network by using the second authentication data, and to receive authentication from the first communication system (2) by using the first authentication data.

2. The information processing apparatus (10) according to claim 1, wherein
the first authentication data and the second authentication data are both SIM profile information.

3. The information processing apparatus (10) according to claim 1, wherein
the first communication system (2) is a system that authenticates a user terminal by using SIM profile information held by an eUICC, and
the storage stores SIM profile information as the first authentication data.

4. The information processing apparatus (10) according to claim 1, wherein
the first communication system (2) is a system that authenticates a user terminal by an authentication function of the cellular network, and
the storage stores SIM profile information as the first authentication data.

5. The information processing apparatus (10) according to any one of claims 2 to 4, wherein
the first communication system (2) is a communication system that is connected to the cellular network via an untrusted network.

6. The information processing apparatus (10) according to claim 1, wherein
a cellular module for accessing the cellular network is not included.

7. A communication method performed by an information processing apparatus (10) including a communication interface (105) that is capable of accessing a predetermined cellular network and that is for connecting to a communication apparatus (11) holding second authentication data, the method comprising:
acquiring, from a storage, first authentication data for receiving authentication from a first communication system;
accessing the first communication system (2) via the communication apparatus (11) and the cellular network in a case where the communication apparatus (11) connects to the cellular network by using the second authentication data; and
receiving authentication from the first communication system (2) by using the first authentication data.

8. The communication method according to claim 7, wherein
the first authentication data and the second authentication data are both SIM profile information.

9. The communication method according to claim 7, wherein
the first communication system (2) is a system that authenticates a user terminal by using SIM profile information held by an eUICC, and
the storage stores SIM profile information as the first authentication data.

10. The communication method according to claim 7,
wherein
the first communication system (2) is a system that authenticates a user terminal by an authentication function of the cellular network, and
the storage stores SIM profile information as the first authentication data.

11. The communication method according to claim 8, wherein
the first communication system (2) is a communication system that is connected to the cellular network via an untrusted network.

12. The communication method according to claim 7, wherein
a cellular module for accessing the cellular network is not included.

13. A non-transitory storage medium storing a program for causing a computer to perform the communication method according to any one of claims 7 to 12.

14. An information processing apparatus (10) comprising:
a storage configured to store SIM profile information for receiving authentication from a first communication system (2) that authenticates a user terminal by using the SIM profile information;
a communication interface (105) for connecting to a communication apparatus (11) that is capable of accessing a first network; and
a controller (101) configured to access the first communication system (2) via the communication apparatus (11) and the first network in a case where the communication apparatus (11) connects to the first network, and to receive authentication from the first communication system (2) by using the SIM profile information.
